(19) Europäisches Patentamt / European Patent Office / Office européen des brevets

(11) **EP 1 811 266 A1**

(12) **DEMANDE DE BREVET EUROPEEN**

(43) Date de publication:
**25.07.2007 Bulletin 2007/30**

(51) Int Cl.:
*G01B 11/06* (2006.01)

(21) Numéro de dépôt: **07100514.4**

(22) Date de dépôt: **15.01.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **23.01.2006 FR 0650226**

(71) Demandeur: **NEOPOST TECHNOLOGIES**
**92220 Bagneux (FR)**

(72) Inventeur: **Defosse, Sébastien**
**92260 FONTENAY AUX ROSES (FR)**

(74) Mandataire: **David, Alain et al**
**Cabinet Beau de Loménie**
**158, rue de l'Université**
**75340 Paris Cedex 07 (FR)**

(54) **Système de détermination de tarifs postaux à partir de l'épaisseur des articles de courrier**

(57) Système de détermination de tarifs postaux comprenant un levier (16) pivotant autour d'un axe d'articulation (28), une roue (18) disposée à une extrémité du levier et en contact au repos avec une surface (12) de transport de l'article de courrier (14), un moyen de mesure (20, 22, 24) disposé à l'autre extrémité de ce levier pour en mesurer le déplacement angulaire lors du transport de l'article de courrier et délivrer un signal en rapport avec l'amplitude de ce déplacement, et une unité de traitement (26) connectée au moyen de mesure pour déterminer l'épaisseur de l'article de courrier, le moyen de mesure comportant un codeur (20) comportant une pluralité d'ouvertures (22) correspondant chacune à un seuil déterminé d'un tarif postal, réparties en arc de cercle sur une partie d'anneau et aptes à défiler devant un capteur fixe (24) comportant un émetteur d'un rayon lumineux et un récepteur de ce rayon lumineux, l'unité de traitement étant apte à compter un nombre d'ouvertures traversées par le rayon lumineux lors du passage de la roue sur l'article de courrier et à en déduire le tarif postal correspondant à cet article de courrier.

FIG.3

## Description

Domaine de la technique

La présente invention se rapporte au domaine du traitement de courrier. Elle vise en particulier un dispositif de mesure de l'épaisseur d'un article de courrier transporté dans un système d'affranchissement en vue de la détermination de tarifs postaux.

Art antérieur

On connaît déjà, par exemple, par les documents US 4,879,513 ou US 4,982,947 des dispositifs pour mesurer l'épaisseur, par exemple d'une rame de papier, à partir de la variation de l'inductance d'un circuit électrique ou d'un transformateur différentiel. Toutefois, ces réalisations ne permettent à la détermination de tarifs postaux.

Objet et définition de l'invention

La présente invention vise ainsi à remédier aux inconvénients précités et à permettre de façon simple la détermination de tarifs postaux par une simple mesure de l'épaisseur d'un article de courrier. Un but de l'invention est aussi de permettre cette détermination au vol, c'est à dire pendant le transport de l'article de courrier au travers du système d'affranchissement et sans arrêt de celui-ci.

Ces buts sont atteints conformément à l'invention grâce à un système de détermination de tarifs postaux comprenant un levier pivotant autour d'un axe d'articulation, une roue disposée à une extrémité du levier et en contact au repos avec une surface de transport de l'article de courrier, un moyen de mesure disposé à l'autre extrémité de ce levier pour en mesurer le déplacement angulaire lors du transport de l'article de courrier sur ladite surface de transport et délivrer un signal en rapport avec l'amplitude de ce déplacement, et une unité de traitement connectée au moyen de mesure pour déterminer de l'article de courrier, caractérisé en ce que ledit moyen de mesure comporte un codeur comportant une pluralité d'ouvertures correspondant chacune à un seuil déterminé d'un tarif postal, réparties en arc de cercle sur une partie d'anneau et aptes à défiler devant un capteur fixe comportant un émetteur d'un rayon lumineux et un récepteur de ce rayon lumineux, l'unité de traitement étant apte à compter un nombre d'ouvertures traversées par ledit rayon lumineux lors du passage de ladite roue sur ledit article de courrier et à en déduire le tarif postal correspondant audit article de courrier.

Ainsi, le recours à un simple codeur comportant des ouvertures associées à un capteur optique permet par une mesure de l'épaisseur de tout article de courrier la détermination automatique du tarif postal correspondant à cet article.

De préférence, pour déterminer le sens de déplacement du levier, ledit capteur comporte en outre un autre récepteur déphasé d'un quart de pas par rapport audit récepteur.

De préférence, ledit levier comporte deux bras disposés en forme de L ou de V et formant entre eux un angle de 30 à 90°.

Brève description des dessins

D'autres caractéristiques et avantages de l'invention ressortiront de la description suivante de modes de réalisation particuliers, donnés à titre d'exemples, en référence aux dessins annexés, sur lesquels :

- la figure 1 est une vue illustrant un dispositif de mesure de l'épaisseur d'un article de courrier;
- la figure 1A est un détail de la figure 1 montrant le capteur de mesure;
- la figure 2 est un diagramme explicitant le principe de mesure mis en oeuvre dans le dispositif de la figure 1 ; et
- la figure 3 est une vue illustrant un système de détermination de tarifs postaux selon l'invention.

Description détaillée de modes de réalisation préférentiels

Dans beaucoup de pays, la tarification des articles de courrier repose sur des critères de poids et de dimension de ces articles de courriers (épaisseur, longueur de l'enveloppe, largeur de En matière de poids, il s'agit de rattacher l'article de courrier à une catégorie de poids déterminée. En matière de dimensions, il s'agit soit de vérifier que l'épaisseur de l'enveloppe est supérieure à des seuils (exemples : 0,4mm et 6,35mm aux USA, 5mm et 25mm au Royaume Uni), soit de vérifier que le rapport entre la longueur et la largeur de l'enveloppe est compris entre deux limites (exemples : 1,3 < R < 2,5 pour les USA ou encore R < racine carrée de 2 pour l'Allemagne).

La mesure du poids de l'article de courrier est en général effectuée au coeur du système d'affranchissement par un module de pesée dynamique qui assure une pesée au vol des articles de courrier. Or, la connaissance préalable des dimensions de l'article de courrier permet d'optimiser le temps de pesée et donc d'améliorer notablement la cadence d'affranchissement. Aussi, pour attribuer de façon automatique le tarif adapté à chaque article de courrier dans un lot non homogène, on dispose en général au niveau du module d'alimentation du système d'affranchissement, appelé aussi alimenteur, un dispositif qui mesure les dimensions de chaque enveloppe et transmet ces informations à un calculateur de tarif. Les demandes FR 05 00929 et FR 05 00930 déposées au nom de la demanderesse illustrent des dispositifs permettant une mesure au vol de la largeur d'un article de courrier.

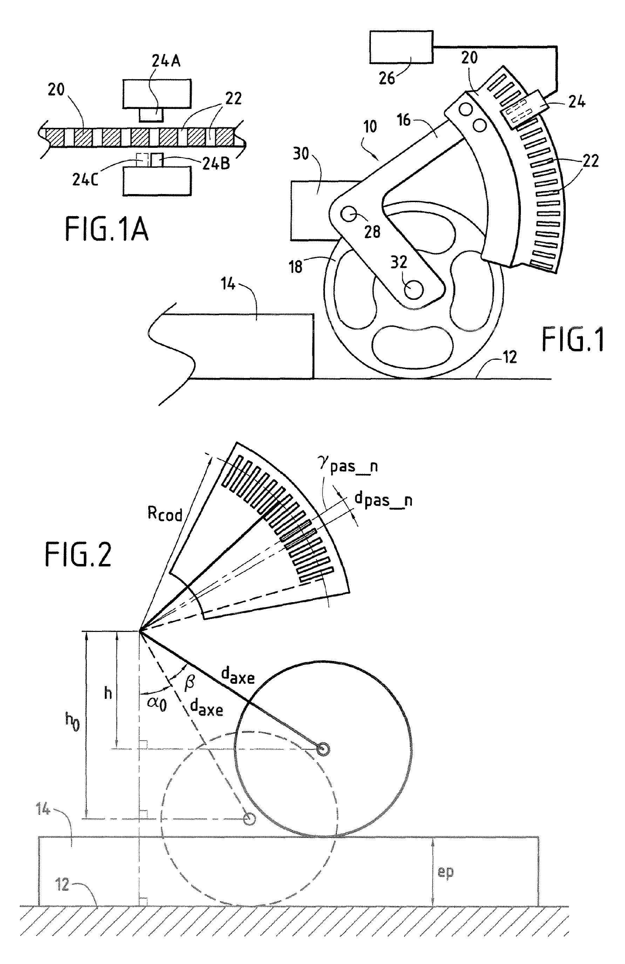

La figure 1 illustre un dispositif permettant une détermination du tarif postal par une mesure au vol de l'épaisseur d'un article de courrier.

Ce dispositif 10 disposé avantageusement en sortie d'un module de sélection délivrant un à un sur une table de transport 12 les articles de courrier 14 issus d'un module d'alimentation, comporte simplement un levier 16 présentant de préférence deux bras en forme de L ou V et dont une extrémité (par exemple l'extrémité libre du bras formant une barre du L ou du V) est reliée à une roue 18 actionnée par le déplacement de l'article de courrier avec lequel elle est en contact, l'autre extrémité de ce levier (par exemple l'extrémité libre de l'autre bras) étant reliée à un codeur 29 dont le marquage 22 défile un capteur 24 avec lequel il et qui est apte à délivrer l'épaisseur de l'article de courrier après détermination par une unité de traitement 26.

Le levier 16 sous l'action de la roue 18 pivote autour d'un axe d'articulation 28 disposé par exemple à l'intersection des deux barres du L ou V qui forment entres elles un angle compris avantageusement entre 30 et 90°. Cet axe est monté transversalement par rapport au sens de déplacement des articles de courrier et solidaire du châssis 30 du système d'affranchissement. La roue 18 est montée folle au niveau d'un axe de rotation 32 distant de l'axe d'articulation d'un entraxe (dax). Le codeur 20 se présente avantageusement sous la forme d'une partie d'anneau d'angle compris de préférence entre 30 à 45°, sur lequel est porté le marquage. Ce marquage du codeur est de préférence constitué de simple fentes ou ouvertures disposées en arc de cercle. Le capteur 24 est avantageusement formé d'un ensemble émetteur 24A/récepteur 24B lumineux (par exemple à LED) solidaire du châssis et qui délivre, à chaque passage d'un marquage, un signal pour l'unité de traitement 26. On comptabilise ainsi au niveau de l'unité de traitement 26 (comportant notamment un compteur réinitialisé à chaque article de courrier) le nombre d'ouvertures ou fentes vues par le capteur d'où l'on en déduit l'épaisseur du document comme indiqué ci-dessous.

En effet, soient les variables suivantes :

$\alpha 0$ : angle au repos entre la verticale et le levier
$\beta$ : angle du levier par rapport à sa position repos
dax : distance axe articulation levier et axe rotation roue
ep : épaisseur de l'article de courrier
RCod : rayon du codeur
dpas_n : distance entre les ouvertures n et n+1 du codeur
ypas_n : angle entre l'ouverture n et l'ouverture n+1 du codeur
L'épaisseur ep de l'article est donnée par l'équation suivante :

$$ep = h0 - h \qquad (1)$$

$$h0/dax = \cos \alpha 0 \qquad (2)$$

$$h/dax = \cos (\alpha 0 + \beta) \qquad (3)$$

(1), (2) et (3) donnent :

$$ep = dax*(\cos \alpha 0 - \cos (\alpha 0 + \beta)) \qquad (4)$$

dax et a0 sont de construction.
$\beta$ est donné par l'ensemble codeur + capteur. En effet :
$\sin (ypas\_n \ / \ / \ 2) = (dpas\_n/ \ 2) / RCod$

$$\gamma pas\_n = 2 \arcsin [dpas\_n / (2*RCod)] \quad (5)$$

$$\beta = \gamma pas\_1 + \gamma pas\_2 + ... + \gamma pas\_n \quad (6)$$

(4), (5) et (6) donnent donc :

$$ep = dax*(\cos \alpha 0 - \cos (\alpha 0 + 2 \arcsin [dpas\_1 / (2*RCod)] + ...$$
$$+ 2 \arcsin [dpas\_n / (2*RCod)])) \quad (7)$$

RCod et dpas étant connus par construction, la détermination du nombre de fentes vues par le capteur suffit donc bien à lui seul à déterminer l'épaisseur de l'article de courrier.

Toutefois, pour ne pas fausser la mesure, il ne doit pas y avoir de rebonds du levier, ni d'articles de courrier d'épaisseurs irrégulières (le système additionnant en effet les fentes vues par le codeur quelque soit le sens de rotation du levier). Aussi, pour s'affranchir des chocs qui feraient décoller le levier de l'article de courrier, pour pouvoir faire une moyenne de l'épaisseur en plusieurs endroits si l'article de courrier est d'épaisseur irrégulière ou encore pour ne prendre en compte que son épaisseur maximale, il peut être intéressant que le capteur comporte 2 récepteurs fonctionnant en quadrature, c'est-à-dire ayant entre eux une distance dR telle que :

$$dR = ¼ \, dpas \, modulo \, [1/2 \, dpas] \quad (8)$$

Dans cette première variante, un premier récepteur 24B détecte chaque passage d'une partie pleine à une partie vide et d'une partie vide à une partie pleine du codeur. C'est l'état du second récepteur 24C, déphasé d'un quart de pas par rapport au premier récepteur, qui permet de connaître le sens de rotation du levier et ainsi additionner ou retrancher chaque changement d'état du premier récepteur. Le pas angulaire du codeur (pas codeur) doit être constant pour respecter la (8).

Dans cette configuration, le levier ne doit pas nécessairement retourner en position repos entre chaque de courrier, Il n'y a pas de réinitialisation du compteur de de traitement puisque le système tient compte du sens de rotation du levier, ce qui permet de réduire l'écart entre les articles de courrier (avec la possibilité de le rendre nul) et ainsi d'augmenter les cadences d'affranchissement.

Dans la plupart des pays, il n'y a qu'un ou deux seuils de tarifs pour l'épaisseur (par exemple : 0,4 et 6,35 mm aux US, 5 mm au Canada, 5 et 25 mm au Royaume-uni, 5, 10, 20, 50 mm en Allemagne), il est donc proposé selon l'invention de faire correspondre chaque fente du codeur avec un saut de tarif postal, l'ensemble devenant ainsi un système de détermination de tarifs postaux.

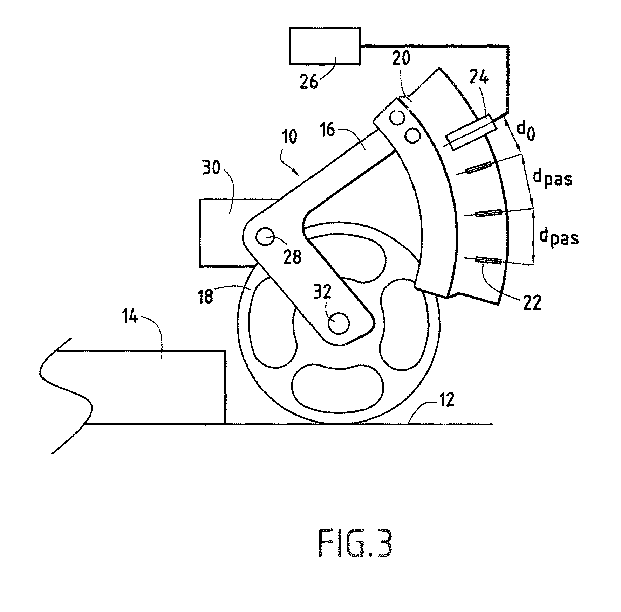

Ainsi, avec deux seuils de tarif, on obtient le codeur illustré à la figure 3 qui comporte seulement trois ouvertures, la première ouverture étant disposée à une distance d0 d'une position initiale correspondant à l'absence d'article de courrier, la deuxième ouverture 32 étant distante de dpas de la première ouverture 30, la troisième ouverture 34 distante également de dpas de la deuxième ouverture 32 étant nécessaire au deuxième récepteur 24C pour permettre la détermination du sens de rotation du levier.

La position des ouvertures peut être déterminée comme suit :

En partant de l'équation (7) précitée, l'épaisseur ep1 correspondant au premier seuil de tarif est donnée par :

$$ep1 = dax*( \cos \alpha 0 - \cos (\alpha 0 + 2 \arcsin [d0 / (2*RCod)]))$$

$$soit \cos \alpha 0 - ( ep1/dax) = \cos (\alpha 0 + 2 \arcsin [d0 / (2*RCod)])$$

$$\arccos [\cos α0 - (ep1/dax)] = α0 + 2 \arcsin [d0 / (2*RCod)] \quad (9)$$

$$[\arccos (\cos α0 - (ep1/dax)) - α0] / 2 = \arcsin [d0 / (2*RCod)]$$

$$\sin [[\arccos (\cos α0 - (ep1/dax)) - α0] / 2] = d0 / (2*RCod)$$

On pourra donc choisir d0 tel que :

$$d0 = (2*RCod) * \sin[[\arccos (\cos α0 - (ep1/dax)) - α0] / 2]$$
$$(10)$$

De même, l'épaisseur ep2 correspondant au deuxième seuil de tarif est donnée par, en partant toujours de l'équation (7) :

$$ep2 = dax*( \cos α0 - \cos (α0 + 2 \arcsin [d0 / (2*RCod)] + 2 \arcsin [dpas / (2*RCod)]))$$

$$\cos α0 - (ep2/dax) = \cos (α0 + 2 \arcsin [d0 / (2*RCod)] + 2 \arcsin [dpas / (2*RCod)])$$

$$\arccos [\cos α0 - (ep2/dax)] = α0 + 2 \arcsin [d0 / (2*RCod)] + 2 \arcsin [dpas / (2*RCod)]$$

En injectant (9), on obtient :

$$\arccos [\cos α0 - (ep2/dax)] = \arccos [\cos α0 - (ep1/dax)] + 2 \arcsin [dpas / (2*RCod)]$$

$$[dpas / (2*RCod)] = \sin[[\arccos (\cos α0 - (ep2/dax)) - \arccos (\cos α0 - (ep1/dax))] / 2 ]$$

Il faut donc ici encore choisir dpas tel que :

$$dpas = (2*RCod) * \sin[[\arccos (\cos α0 - (ep2/dax)) - \arccos (\cos α0 - (ep1/dax))] / 2] \quad (11)$$

Ainsi, un dispositif de détermination de tarifs postaux mis en oeuvre dans une machine à affranchir aux Etats Unis dont les deux seuils tarifaires sont fixés respectivement à ep1=0,4 mm et ep2=6,35 mm donnera par application des équations (10) et (11) les valeurs suivantes pour d0 et dpas:

$$d0 = 0{,}78 \text{ mm et } dpas = 10{,}21 \text{ mm}$$

$$\text{Avec } dax = 25 \text{ mm}, \ RCod = 35 \text{ mm et } a0 = 45°$$

On notera que l'application de l'équation (11) permet aussi en se fixant une valeur de dpas, dax et a0 comme précédemment préalablement fixés, de déterminer RCod puis par application de l'équation (10) de déterminer do.

**Revendications**

1. Système de détermination de tarifs postaux comprenant un levier (16) pivotant autour d'un axe d'articulation (28), une roue (18) disposée à une extrémité du levier et en contact au repos avec une surface (12) de transport de l'article de courrier (14), un moyen de mesure (20, 22, 24) disposé à l'autre extrémité de ce levier pour en mesurer le déplacement angulaire lors du transport de l'article de courrier sur ladite surface de transport et délivrer un signal en rapport avec l'amplitude de ce déplacement, et une unité de traitement (26) connectée au moyen de mesure pour déterminer l'épaisseur de l'article de courrier, **caractérisé en ce que** ledit moyen de mesure comporte un codeur (20) comportant une pluralité d'ouvertures (22) correspondant chacune à un seuil déterminé d'un tarif postal, réparties en arc de cercle sur une partie d'anneau et aptes à défiler devant un capteur fixe (24) comportant un émetteur (24A) d'un rayon lumineux et un récepteur (24B) de ce rayon lumineux, l'unité (26) de traitement étant apte à compter un nombre d'ouvertures traversées par ledit rayon lumineux lors du passage de ladite roue sur ledit article de courrier et à en déduire le tarif postal correspondant audit article de courrier.

2. Dispositif selon la revendication 1, **caractérisé en ce que** ledit capteur comporte en outre un autre récepteur (24C) déphasé d'un quart de pas par rapport audit récepteur.

3. Dispositif selon la revendication 1, **caractérisé en ce que** ledit levier comporte deux bras disposés en forme de L ou de V et formant entre eux un angle de 30 à 90°.

FIG.1A

FIG.1

FIG.2

FIG.3

**Office européen**

**des brevets**

**RAPPORT DE RECHERCHE EUROPEENNE**

Numéro de la demande

EP 07 10 0514

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 0 906 792 A (PITNEY BOWES INC) 7 avril 1999 (1999-04-07) * colonne 6, ligne 7 - ligne 27 * * revendications 7,9 * * figure 1 * ----- | 1-3 | INV. G01B11/06 |
| Y | EP 0 548 874 A (NEOPOST INDUSTRIE) 30 juin 1993 (1993-06-30) * page 1, ligne 6 - ligne 34 * * revendication 2 * * figures 1-3 * ----- | 1-3 | |
| A | US 2003/209657 A1 (VEJTASA DAVID S) 13 novembre 2003 (2003-11-13) * alinéa [0012] - alinéa [0014] * * alinéa [0017] - alinéa [0019] * * figures 1,2 * ----- | 1-3 | |
| | | | DOMAINES TECHNIQUES RECHERCHES (IPC) G01B B07C |

Le présent rapport a été établi pour toutes les revendications

| Lieu de la recherche | Date d'achèvement de la recherche | Examinateur |
|---|---|---|
| Munich | 16 mars 2007 | Grand, Jean-Yves |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 07 10 0514

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2007

| Document brevet cité au rapport de recherche | | Date de publication | Membre(s) de la famille de brevet(s) | | Date de publication |
|---|---|---|---|---|---|
| EP 0906792 | A | 07-04-1999 | CA<br>DE<br>DE<br>US | 2249671 A1<br>69812823 D1<br>69812823 T2<br>5988057 A | 13-04-1999<br>08-05-2003<br>04-12-2003<br>23-11-1999 |
| EP 0548874 | A | 30-06-1993 | DE<br>DE<br>FR | 69209026 D1<br>69209026 T2<br>2685470 A1 | 18-04-1996<br>25-07-1996<br>25-06-1993 |
| US 2003209657 | A1 | 13-11-2003 | AU<br>EP<br>JP<br>WO | 2003229049 A1<br>1509467 A1<br>2005524591 T<br>03095345 A1 | 11-11-2003<br>02-03-2005<br>18-08-2005<br>20-11-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4879513 A
- US 4982947 A
- FR 0500929
- FR 0500930